# FASCICULE DE BREVET EUROPEEN

(11) **EP 1 934 071 B1**
(45) Date de publication et mention de la délivrance du brevet: **02.11.2011**
(21) Numéro de dépôt: 06831221.4
(22) Date de dépôt: 22.09.2006
(51) Int. Cl.: B60R 13/02

(54) **DISPOSITIF ET PROCEDE POUR FIXER UNE GARNITURE SUR LE MONTANT DE BAIE D'UN VEHICULE AUTOMOBILE**
VORRICHTUNG UND VERFAHREN ZUR BEFESTIGUNG EINER VERKLEIDUNGSKOMPONENTE AUF EINER VERTIEFUNG IN EINEM FAHRZEUG
DEVICE AND METHOD FOR FIXING A TRIM COMPONENT ON A MOTOR VEHICLE RECESS POST

(30) Priorité: 30.09.2005 FR 0510012
(43) Date de publication de la demande: 25.06.2008
(73) Titulaire: Renault SAS, 92100 Boulogne Billancourt (FR)
(72) Inventeur: GUERLIN, Philippe, F-91540 Mennecy (FR); MOSSU, Stéphane, F-78114 Magny-les-Hameaux (FR)
(86) Numéro de dépôt international: PCT/FR2006/050933
(87) Numéro de publication internationale: WO 2007/036664

(56) Documents cités:
- EP-A- 0 855 313
- EP-A- 1 093 978
- US-A1- 2004 160 078
- PATENT ABSTRACTS OF JAPAN vol. 1995, no. 05, 30 juin 1995 (1995-06-30) & JP 07 040790 A (NISSAN MOTOR CO LTD), 10 février 1995 (1995-02-10)
- PATENT ABSTRACTS OF JAPAN vol. 2003, no. 04, 2 avril 2003 (2003-04-02) & JP 2002 362297 A (HONDA MOTOR CO LTD), 18 décembre 2002 (2002-12-18)

## Description

La présente invention concerne un dispositif et un procédé pour fixer une garniture sur la face intérieure d'un montant de bale, notamment de pare-brise de véhicule automobile.

Un dispositif de fixation de ce genre a été décrit dans 1EP 1093978A1. Ce dispositif de fixation comprend une série d'agrafes comportant chacune sur un côté des moyens de fixation destinés à être encliquetés dans une ouverture pratiquée sur la face intérieure dudit montant et sur le côté opposé des moyens de verrouillage destinés à coopérer avec des moyens complémentaires faisant saillie sur la face interne de la garniture pour verrouiller celle-ci à l'agrafe.

La garniture fixée de cette manière est conformée pour loger un ensemble de coussins gonflables et pour éviter son éjection à l'intérieur de l'habitacle lors du déploiement des coussins gonflables. La garniture de montant de baie recouvre alors en partie un bord de garniture de pavillon. Ainsi, lorsqu'un appui est exercé sur la garniture de montant de baie, la garniture de pavillon a tendance à se déplacer, ce qui peut donner une mauvaise image en termes de qualité perçue.

Le but de la présente invention est d'apporter des améliorations au dispositif de fixation connu ci-dessus.

Suivant l'invention, ce dispositif de fixation est caractérisé en ce qu'il est prévu, entre l'agrafe et une face interne de la garniture, un jeu destiné à recevoir une garniture de pavillon, tel que défini dans la revendication 1.

Selon l'invention chaque agrafe comporte à une certaine distance de sa surface destinée à venir en appui sur la face intérieure du montant, une ailette s'étendant sensiblement parallèlement à la surface interne du montant de baie, cette ailette étant destinée à être recouverte par ladite garniture de telle sorte qu'il existe un jeu entre ladite ailette et la garniture.

Cette ailette constitue ainsi une surface formant un jeu avec la garniture de montant pour y laisser passer la garniture de pavillon et limiter le déplacement de la garniture de pavillon.

Selon une réalisation préférée de l'invention, la surface de l'agrafe destinée à venir en appui sur le montant est formée sur une embase qui est séparée de ladite ailette par des languettes de liaison flexibles.

<tel que défini dans la revendication 1.>

Ces languettes de liaison flexibles sont ainsi aptes à amortir des efforts exercés contre la garniture de montant de baie.

Selon d'autres particularités de l'invention:
- ladite surface de l'agrafe comporte un pion d'encliquetage faisant saillie dans une direction opposée à la face intérieure du montant de baie ;
- la surface intérieure de l'embase porte une première languette qui est raccordée, d'une part, à une deuxième languette qui est reliée à ladite ailette et d'autre part à une troisième languette dont l'extrémité libre est destinée à être engagée entre de premiers moyens de verrouillage faisant saillie sur la face interne de la garniture ;
- la première languette est raccordée à l'embase sensiblement au droit du pion d'encliquetage ;
- la surface intérieure de l'embase porte un crochet s'étendant vers ladite ailette destinée à coopérer avec de seconds moyens de verrouillage faisant saillie sur la face interne de la garniture ;
- l'une des extrémités de l'embase est recourbée dans une direction opposée à la face intérieure du montant de baie, cette partie recourbée étant destinée à être recouverte par ladite garniture de telle sorte qu'il existe un jeu entre cette partie recourbée et la garniture ;
- la face intérieure de l'ailette porte une languette qui s'étend entre lesdites deuxième et troisième languettes et prend appui sur cette dernière.

D'autres particularités et avantages de l'invention apparaîtront encore tout au long de la description ci-après.

Aux dessins annexés, donnés à titre d'exemples, non limitatifs :
- la figure 1 est une vue en coupe suivant un plan horizontal d'un montant de pare-brise d'un véhicule automobile sur lequel est fixée une garniture au moyen d'un dispositif de fixation selon l'invention,
- la figure 2 est une vue en plan d'un dispositif de fixation suivant la flèche F de la figure 1.

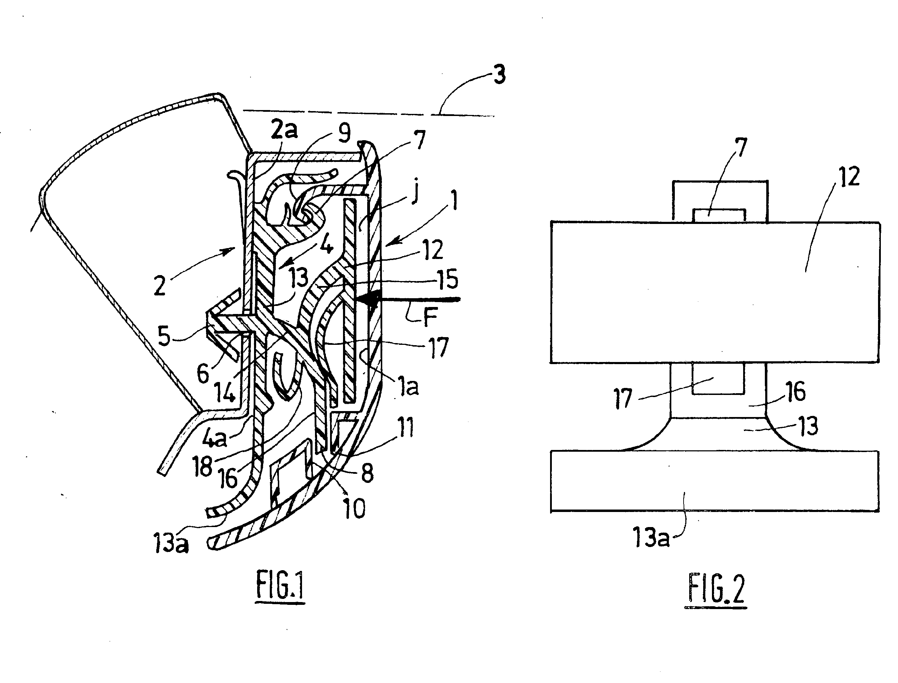

Comme montré par les figures 1 et 2, le dispositif pour figer une garniture 1 sur la face intérieure 2a d'un montant 2 du pare-brise 3 d'un véhicule automobile, comprend une série d'agrafes 4 comportant chacune sur un côté des moyens de fixation 5 destinés à être encliquetés dans une ouverture 6 pratiquée sur la face intérieure 2a du montant 2 et sur le côté opposé des moyens de verrouillage 7, 8 destinés à coopérer avec des moyens complémentaires 9, 10, 11 faisant saillie sur la face interne la de la garniture 1 pour verrouiller celle-ci à l'agrafe 4.

Conformément à l'invention, chaque agrafe 4 comporte à une certaine distance de sa surface 4a destinée à venir en appui sur la face intérieure 2a du montant 2, une ailette 12 s'étendant sensiblement parallèlement à la surface interne de la garniture de montant de baie. Cette ailette 12 est destinée à être recouverte par la garniture 1 de telle sorte qu'il existe un jeu j entre l'ailette 12 et la garniture 1. Ce jeu j est par exemple de l'ordre de quelques millimètres et est légèrement inférieur à l'épaisseur de la garniture de pavillon.

La surface 4a de l'agrafe 4 destinée à venir en appui sur le montant 2 est formée sur une embase 13 qui est séparée de l'ailette 12 par des languettes de liaison flexibles 14, 15 16.

Dans l'exemple représenté (voir figure 1), la surface 4a de l'agrafe 4 comporte un pion d'encliquetage 5 faisant saillie dans une direction opposée à la face 2a du montant de baie 2.

Par ailleurs, la surface intérieure de l'embase 13 porte une première languette 14 qui est raccordée d'une part, à une deuxième languette 15 qui est reliée à l'ailette 12 et d'autre part, à une troisième languette 16 dont l'extrémité libre 8 est destinée à être engagée entre de premiers moyens de verrouillage 10, 11 faisant saillie sur la face interne la de la garniture 1.

Comme montré par la figure 1, la première languette 14 est raccordée à l'embase 13 sensiblement au droit du pion d'encliquetage 5.

La surface intérieure de l'embase 13 porte sur l'un de ses côtés un crochet 7 s'étendant vers l'ailette 12, destinée à coopérer avec de seconds moyens de verrouillage 9 faisant saillie sur la face interne la de la garniture 1.

Par ailleurs, l'extrémité de l'embase 13 opposée au crochet 9 est recourbée dans une direction opposée à la face 2a du montant de baie 2. Cette partie recourbée 13a est destinée à être recouverte par la garniture 1 de telle sorte qu'il existe un jeu de quelques millimètres entre cette partie recourbée 13a et la garniture 1 pour y laisser passer la garniture de pavillon.

D'autre part, la face intérieure de l'ailette 12 porte une petite languette 17 qui s'étend entre les deuxième et troisième languettes 15, 16 et prend appui élastiquement sur cette dernière. Une autre petite languette flexible 18 recourbée en U est prévue entre la troisième languette 16 et l'embase 13.

Bien entendu, l'agrafe 4 que l'on vient de décrire est moulée d'une seule pièce en matière plastique flexible, dont la forme peut varier en fonction de la géométrie des garnitures.

Le dispositif de fixation que l'on vient de décrire présente les principaux avantages suivants :
- l'ailette 12 de l'agrafe 4 limite le « pompage » c'est-à-dire le déplacement de la garniture de pavillon sous l'effet d'un appui exercé dans la zone d'accostage entre la garniture de montant et la garniture de pavillon ;
- le même effet est procuré par la partie recourbée 13a de l'embase de l'agrafe ;
- la liaison flexible assurée par les languettes 14, 15, 16 disposées entre l'ailette 12 et l'embase 13 de l'agrafe permet d'amortir les efforts appliqués selon la flèche F1 de la figure 1. Les languettes permettent également la fixation de garniture de montant de baie.

Pour monter le dispositif, la garniture de pavillon étant préalablement montée, on fixe l'agrafe 4 sur le montant de baie et on monte la garniture de montant de baie sur l'agrafe 4.

## Revendications

1. Dispositif de fixation d'une garniture (1) sur la face intérieure d'un montant de baie (2) notamment de pare-brise de véhicule automobile, comprenant une série d'agrafes (4) comportant chacune sur un côté des moyens de fixation (5) destinés à être encliquetés dans une ouverture (6) pratiquée sur la face intérieure dudit montant (2) et sur le côté opposé des moyens de verrouillage (7, 8) destinés à coopérer avec des moyens complémentaires (9, 10, 11) faisant saillie sur la face interne de la garniture (1) pour verrouiller celle-ci à l'agrafe (4), **caractérisé en ce que** chaque agrafe (4) comporte à une certaine distance de sa surface (4a) destinée à venir en appui sur la face intérieure du montant (2) une ailette (12) s'étendant sensiblement parallèlement à la surface interne du montant de baie, cette ailette (12) étant destinée à être recouverte de ladite garniture (1) de telle sorte qu'il existe, en position de verrouillage de la garniture sur l'agrafe, un jeu (j) entre ladite ailette (12) et la garniture (1) destiné à recevoir une garniture due pavillon.

2. Dispositif selon la revendication 1, caractérisé en qu'il comporte une embase (13) dont l'une des extrémités est recourbée dans une direction opposée à la face (2a) du montant de baie (2), cette partie recourbée (13a) étant destinée à être recouverte par ladite garniture (1) de telle sorte qu'il existe un jeu entre cette partie recourbée (13a) et la garniture (1) en position de verrouillage de la garniture sur l'agrafe.

3. Dispositif selon la revendication 1, **caractérisé en ce que** la surface (4a) de l'agrafe (4) destinée à venir en appui sur le montant (2) est formée sur une embase (13) qui est séparée de ladite ailette (12) par des languettes de liaison flexibles (14, 15, 16).

4. Dispositif selon la revendication 3, **caractérisé en ce que** la surface (4a) de l'agrafe (4) comporte un pion d'encliquetage (5) faisant saillie dans une direction opposée à la face (2a) du montant de baie (2).

5. Dispositif selon la revendication 4, **caractérisé en ce que** la surface intérieure de l'embase (13) porte une première languette (14) qui est raccordée, d'une part, à une deuxième languette (15) qui est reliée à ladite ailette (12) et d'autre part à une troisième languette (16) dont l'extrémité libre (8) est destinée à être engagée entre de premiers moyens de verrouillage (10, 11) faisant saillie sur la face interne de la garniture (1).

6. Dispositif selon la revendication 5 **caractérisé en ce que** la première languette (14) est raccordée à l'embase (13) sensiblement au droit du pion d'encliquetage (5).

7. Dispositif selon l'une des revendications 2 à 6, **caractérisé en ce que** la surface intérieure de l'embase (13) porte un crochet (7) s'étendant vers ladite ailette (12) destinée à coopérer avec de seconds moyens de verrouillage (9) faisant saillie sur la face interne de la garniture (1).

8. Dispositif selon l'une des revendications 5 à 7, **caractérisé en ce que** la face intérieure de l'ailette (12) porte une languette (17) qui s'étend entre lesdites deuxième et troisième languettes (15, 16) et prend appui sur cette dernière.

9. Procédé de montage mettant en oeuvre le dispositif selon l'une des revendications 1 à 8, **caractérisé en ce qu'**il comprend les étapes suivantes : la garniture de pavillon étant préalablement montée, on fixe l'agrafe (4) sur le montant de baie et on monte la garniture de montant de baie sur l'agrafe (4) pour verrouiller la garniture sur l'agrafe, la garniture de pavillon étant disposée entre l'ailette (12) de l'agrafe et la garniture de montant de baie (1).

## Claims

1. Device for attaching a trim (1) to the interior face of a post (2) flanking a window recess, particularly an A-post, in a motor vehicle, comprising a series of clips (4) each comprising, at one end, attachment means (5) intended to be clipped into an opening (6) made in the interior face of said post (2) and, at the opposite end, locking means (7, 8) intended to collaborate with complementary means (9, 10, 11) that project from the internal face of the trim (1) in order to lock this trim to the clip (4), **characterized in that** each clip (4) comprises, a certain distance away from its surface (4a) that is intended to bear against the interior face of the post (2) a fin (12) running substantially parallel to the internal surface of the post, this fin (12) being intended to be covered by said trim (1) in such a way that, in the position in which the trim is locked to the clip, a gap (j) intended to accommodate a headlining exists between said fin (12) and the trim (1).

2. Device according to Claim 1, **characterized in that** it comprises a base (13) of which one of the ends is curved away from the face (2a) of the post (2), this curved part (13a) being intended to be covered by said trim (1) in such a way that a gap remains between this curved part (13a) and the trim (1) in the position in which the trim is locked to the clip.

3. Device according to Claim 1, **characterized in that** the surface (4a) of the clip (4) that is intended to rest against the post (2) is formed on a base (13) which is separated from said fin (12) by flexible connecting tabs (14, 15, 16).

4. Device according to Claim 3, **characterized in that** the surface (4a) of the clip (4) includes a clip-fastening pin (5) that projects in the opposite direction to the face (2a) of the post (2).

5. Device according to Claim 4, **characterized in that** the interior surface of the base (13) bears a first tab (14) which is connected, on the one hand, to a second tab (15) which is connected to said fin (12) and, on the other hand, to a third tab (16), the free end (8) of which is intended to be engaged between first locking means (10, 11) that project from the internal face of the trim (1).

6. Device according to Claim 5, **characterized in that** the first tab (14) is connected to the base (13) more or less in line with the clip-fastening pin (5).

7. Device according to one of Claims 2 to 6, **characterized in that** the interior surface of the base (13) bears a hook (7) extending towards said fin (12) intended to collaborate with second locking means (9) that project from the internal face of the trim (1).

8. Device according to one of Claims 5 to 7, **characterized in that** the interior face of the fin (12) bears a tab (17) which extends between said second and third tabs (15, 16) and rests against the latter one.

9. Fitting method employing the device according to one of Claims 1 to 8, **characterized in that** it involves the following steps: once the headlining has already been fitted, the clip (4) is attached to the post and the post trim is mounted on the clip (4) in order to lock the trim to the clip, the headlining being arranged between the fin (12) of the clip and the post trim (1).

## Patentansprüche

1. Vorrichtung zur Befestigung einer Verkleidung (1) an der Innenfläche eines A-Pfostens (2), insbesondere eines Windschutzscheibenpfostens eines Kraftfahrzeugs, umfassend eine Reihe von Klammern (4), die jeweils auf einer Seite Befestigungsmittel (5), die in eine in der Innenfläche des Pfostens (2) ausgebildete Öffnung (6) einrasten sollen, und auf der gegenüberliegenden Seite Verriegelungsmittel (7, 8), die mit komplementären Mitteln (9, 10, 11), die von der Innenfläche der Verkleidung (1) vorragen, zusammenwirken sollen, um sie mit der Klammer (4) zu verriegeln, aufweisen, **dadurch gekennzeichnet, dass** jede Klammer (4) in einem bestimmten Abstand von ihrer Fläche (4a), die in Anlage an die Innenfläche des Pfostens (2) kommen soll, einen Steg (12) aufweist, der sich im Wesentlichen parallel zu der Innenseite des A-Pfostens erstreckt, wobei dieser Steg (12) so von der Verkleidung (1) bedeckt werden soll, dass in Verriegelungsposition der Verkleidung an der Klammer ein Zwischenraum (j) zwischen dem Steg (12) und der Verkleidung (1) besteht, der eine Dachverkleidung aufnehmen soll.

2. Vorrichtung nach Anspruch 1, **dadurch gekennzeichnet, dass** sie eine Basis (13) umfasst, von der ein Ende in einer zu der Fläche (2a) des A-Pfostens (2) entgegengesetzten Richtung gekrümmt ist, wobei dieser gekrümmte Teil (13a) durch die Verkleidung (1) so bedeckt werden soll, dass in Verriegelungsposition der Verkleidung an der Klammer ein Zwischenraum zwischen diesem gekrümmten Teil (13a) und der Verkleidung (1) besteht.

3. Vorrichtung nach Anspruch 1, **dadurch gekennzeichnet, dass** die Fläche (4a) der Klammer (4), die in Anlage an den Pfosten (2) kommen soll, auf einer Basis (13) ausgebildet ist, die durch flexible Verbindungslaschen (14, 15, 16) von dem Steg (12) getrennt ist.

4. Vorrichtung nach Anspruch 3, **dadurch gekennzeichnet, dass** die Fläche (4a) der Klammer (4) einen Raststift (5) aufweist, der in einer zu der Fläche (2a) des A-Pfostens (2) entgegengesetzten Richtung vorragt.

5. Vorrichtung nach Anspruch 4, **dadurch gekennzeichnet, dass** die Innenseite der Basis (13) mit einer ersten Lasche (14) versehen ist, die einerseits mit einer mit dem Steg (12) verbundenen zweiten Lasche (15) verbunden ist und andererseits mit einer dritten Lasche (16) verbunden ist, deren freies Ende (8) zwischen von der Innenfläche der Verkleidung (1) vorragenden ersten Verriegelungsmitteln (10, 11) in Eingriff genommen werden soll.

6. Vorrichtung nach Anspruch 5, **dadurch gekennzeichnet, dass** die erste Lasche (14) im Wesentlichen gegenüber dem Raststift (5) mit der Basis (13) verbunden ist.

7. Vorrichtung nach einem der Ansprüche 2 bis 6, **dadurch gekennzeichnet, dass** die Innenseite der Basis (13) mit einem Haken (7) versehen ist, der sich zu dem Steg (12) erstreckt und mit zweiten Verriegelungsmitteln (9) zusammenwirken soll, die von der Innenfläche der Verkleidung (1) vorragen.

8. Vorrichtung nach einem der Ansprüche 5 bis 7, **dadurch gekennzeichnet, dass** die Innenfläche des Stegs (12) mit einer Lasche (17) versehen ist, die sich zwischen der zweiten und der dritten Lasche (15, 16) erstreckt und sich auf letzterer abstützt.

9. Montageverfahren, das die Vorrichtung nach einem der Ansprüche 1 bis 8 einsetzt, **dadurch gekennzeichnet, dass** es die folgenden Schritte umfasst: nach Vormontage der Dachverkleidung, Befestigen der Klammer (4) an dem A-Pfosten und Anbringen der A-Pfostenverkleidung an der Klammer (4), um die Verkleidung an der Klammer zu verriegeln, wobei die Dachverkleidung zwischen dem Klammersteg (12) und der A-Pfostenverkleidung (1) angeordnet wird.
